Europäisches Patentamt

European Patent Office

Office européen des brevets

(19)

(11) Veröffentlichungsnummer: **0 005 765**
B1

(12) **EUROPÄISCHE PATENTSCHRIFT**

(45) Veröffentlichungstag der Patentschrift:
**18.11.81**

(21) Anmeldenummer: **79101510.0**

(22) Anmeldetag: **17.05.79**

(51) Int. Cl.³: **B 65 D 65/16,** B 65 D 65/42,
C 08 J 5/18, A 22 C 13/00

(54) Schlauchförmige Verpackungshülle, deren Wandung eine mit Cellulosehydrat, hergestellt aus Viskose, imprägnierte und beschichtete faserige Einlage und einen Zusatz in Form eines Farbstoffes oder Lichtschutzmittels enthält, sowie Verfahren zu ihrer Herstellung.

(30) Priorität: **26.05.78 DE 2822886**

(43) Veröffentlichungstag der Anmeldung:
**12.12.79 Patentblatt 79/25**

(45) Bekanntmachung des Hinweises auf die Patenterteilung:
**18.11.81 Patentblatt 81/46**

(84) Benannte Vertragsstaaten:
**BE DE FR GB**

(56) Entgegenhaltungen:
**DE-A-2 312 385**
**DE-C-568 820**
**FR-A-2 209 513**
**FR-A-2 224 088**
**FR-A-2 322 973**
**US-A-3 378 379**

(73) Patentinhaber: **HOECHST AKTIENGESELLSCHAFT,**
**Postfach 80 03 20, D-6230 Frankfurt/Main 80 (DE)**

(72) Erfinder: **Rassbach, Felix, Dotzheimer Strasse 10,**
**D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Schlauchförmige Verpackungshülle, deren Wandung eine mit Cellulosehydrat, hergestellt aus Viskose, imprägnierte und beschichtete faserige Einlage und einen Zusatz in Form eines Farbstoffes oder Lichtschutzmittels enthält, sowie Verfahren zu ihrer Herstellung

Es ist bekannt, schlauchförmige Verpackungshüllen auf Basis von faserverstärktem Cellulosehydrat herzustellen, bei dem man einen Papierfaserschlauch mit Viskoselösung imprägniert und beschichtet, die Farbstoff dispergiert oder gelöst enthält, auf den Schlauch dann flüssiges Fällmittel wirken lässt, ihn wäscht, gegebenenfalls mit chemisches Weichmachungsmittel enthaltender Flüssigkeit behandelt und den Schlauch dann trocknet.

Das bekannte Verfahren hat den Nachteil, dass durch den Farbstoffanteil in der Viskose die Ausbildung der Cellulosehydratstruktur des Schlauchs gestört und dadurch seine mechanischen Eigenschaften negativ beeinflusst werden.

Es ist ferner aus der US-A-3 378 379 bekannt, eine schlauchförmige Verpackungshülle auf Basis von Cellulosehydrat mit Fasereinlage in der Hüllenwand herzustellen, wobei eine Papierfaserbahn zunächst mit einer Lösung eines chemischen Bindemittels auf Basis von synthetischem hydrophilen hitzehärtbaren Harz beschichtet und das Harz ausgehärtet wird und danach die Herstellung der Cellulosehydratschicht auf der Faserbahn durch Regenerieren der Cellulose aus Viskose erfolgt. Das Harz dient als Bindemittel für die Papierfasern und soll insbesondere die Dehnbarkeit der Fasereinlage verbessern. Eine Anregung, dieses Harz zusammen mit einem Farbstoff oder Lichtschutzmittel zu verwenden, vermag diese Druckschrift nicht zu geben.

Es ist ausserdem beschrieben (DE-A-568 820), eine Faserbahn anzufärben, sie dann mit einem Celluloseester zu beschichten und die Cellulose durch Verseifung des Celluloseesters zu regenerieren.

Der Erfindung liegt die Aufgabe zugrunde, eine schlauchförmige Verpackungshülle auf Basis von Cellulosehydrat, die eine Faserverstärkung aufweist, zu schaffen, die nach dem Verfahren der Viskosebeschichtung hergestellt ist und zusätzlich einen Farbstoff oder ein Lichtschutzmittel enthält, ohne dass dadurch die mechanischen Eigenschaften der Verpackungshülle verschlechtert werden sollen, und bei dem die Schlauchwand ausser Cellulosehydrat und gegebenenfalls chemischem Weichmachungsmittel keine anderen chemischen Verbindungen enthält, die dessen physikalische Eigenschaften beeinflussen.

Aufgabe der Erfindung ist es ferner, ein Verfahren zur Herstellung einer solchen Verpackungshülle zu schaffen.

Die der Erfindung zugrundeliegende Aufgabe wird gelöst durch eine schlauchförmige Verpackungshülle gemäss den Ansprüchen 1 bis 3.

Ferner wird die der Erfindung zugrundeliegende Aufgabe gelöst durch ein Verfahren zur Herstellung faserverstärkter schlauchförmiger Verpackungshüllen gemäss dem Anspruch 4.

Das erfindungsgemässe Verfahren erlaubt es, gefärbte Verpackungshüllen herzustellen, die den Vorteil aufweisen, dass die farbgebende chemische Substanz die Ausbildung der optimalen Struktur des den Schlauch bildenden Cellulosehydrats nicht stört und dadurch zu keiner Verschlechterung der physikalischen Eigenschaften der Schlauchhülle führt. Dasselbe gilt auch bei Verwendung von Flüssigkeiten, deren den Farbstoff oder das Lichtschutzmittel bildende chemische Substanz im ultravioletten Wellenlängenbereich des Tageslichts absorbiert und daher UV-Licht stabilisierend wirkt.

Der Faserüberzug aus dem chemischen Stoffgemenge ist unmittelbar auf der Faseroberfläche angeordnet.

Unter der Bezeichnung «Farbstoff oder Lichtschutzmittel» sollen anorganische chemische Stoffe sowie organische chemische Verbindungen verstanden werden, die zur teilweisen Absorption von Lichtquellen des sichtbaren und/oder ultravioletten Bereichs des Tageslichts befähigt sind.

Die Bezeichnung «Farbstoff oder Lichtschutzmittel» umfasst auch Abmischungen optisch wirksamer chemischer Verbindungen chemisch unterschiedlicher Struktur, beispielsweise eine Abmischung von wenigstens zwei chemischen Verbindungen, wobei die einzelnen chemischen Verbindungen jeweils Lichtquellen unterschiedlicher Wellenlänge des sichtbaren Bereichs des Tageslichts absorbieren, oder auch Abmischungen chemischer Verbindungen, bei denen ein Teil aus chemischen Verbindungen besteht, die befähigt sind, Lichtquellen des sichtbaren Bereichs des Tageslichts zu absorbieren, und der andere Teil des Gemenges aus chemischen Verbindungen besteht, die im ultravioletten Wellenlängenbereich des Tageslichts absorbieren.

Es ist auch möglich, dass die zur Verwendung gelangenden chemischen Verbindungen ausschliesslich im ultravioletten Wellenlängenbereich des Tageslichts absorbieren.

Der flüchtige flüssige Anteil der Flüssigkeit besteht aus Wasser oder aliphatischen organischen chemischen Substanzen, die als Lösungsmittel für die den Farbstoff oder das Lichtschutzmittel bildenden chemischen Verbindungen und/oder die synthetischen hydrophilen Harzvorkondensate geeignet sind, wie beispielsweise aliphatische Alkohole, insbesondere Äthanol oder Isopropanol, der flüchtige flüssige Anteil der Flüssigkeit kann auch aus wässrigen Lösungen der genannten Alkohole bestehen; geeignete organische aliphatische Lösungsmittel sind auch Äther, Ester und Ketone oder Mischungen derselben.

Das – als chemisches Bindemittel wirkende – synthetische hydrophile Harzvorkondensat ist dadurch charakterisiert, dass es infolge seines molekularen Aufbaus noch wasserlöslich ist, jedoch durch Wärmeeinwirkung (Wärmehärtung) in wasserunlöslichen Zustand überführbar ist.

Das chemische Bindemittel liegt bei der gegenständlichen Erfindung in durch Wärmeeinwirkung gehärtetem, d.h. wasserunlöslichem Zustand vor.

Die Bezeichnung «synthetisches hydrophiles Harzvorkondensat» umfasst auch Gemenge chemisch unterschiedlich aufgebauter chemischer Verbindungen der genannten Art.

Der Feststoffanteil der verfahrensgemäss auf wenigstens eine Oberfläche der Faserbahn zur Einwirkung gelangenden Flüssigkeit besteht aus einem Stoffgemenge, das zum mengenmässig überwiegenden Anteil aus synthetischem hydrophilem Harzvorkondensat und zum mengenmässig geringeren Anteil aus optisch wirksamer chemischer Substanz, jeweils bezogen auf das Gesamtgewicht des Stoffgemenges, besteht.

Das Stoffgemenge bildet den mengenmässig geringeren Anteil der Flüssigkeit, während das flüssige flüchtige chemische Mittel (Lösungs- bzw. Disperisonsmittel) den mengenmässig überwiegenden Anteil derselben, jeweils bezogen auf ihr Gesamtgewicht darstellt.

Als synthetische hydrophile Harzvorkondensate sind die nachfolgend genannten besonders geeignet:

1. Chemische Reaktionsprodukte, die durch Kondensationsreaktion
a) aus Harnstoff und Formaldehyd und
b) aus Melamin und Formaldehyd
entstehen.

2. Chemische Reaktionsprodukte, die durch chemischen Umsatz von Epichlorhydrin mit Polyamin-Polyamid, Epichlorhydrin mit Polyamin, Epichlorhydrin mit Polyamid oder Epichlorhydrin mit Polyamid und Polyamin herstellbar sind.

Die genannten synthetischen hydrophilen Harzvorkondensate gehören zum Stande der Technik und sind als solche nicht Gegenstand der vorliegenden Erfindung.

Geeignete chemische Stoffe als Farbstoff oder Lichtschutzmittel sind sowohl solche auf anorganischer Basis, wie beispielsweise Titandioxid, Eisenoxid, Kobaltoxid, Russ, Aluminium in für den Verwendungszweck entsprechender Partikelgrösse, als auch organisch-chemische Verbindungen, insbesondere organische chemische wasserlösliche Verbindungen, deren chemische Konstitution angegeben ist unter den Colour Index-Nummern 11 765, 21 100, 21 108, 21 110, 12 370, 12 420, 71 100, 12 517, 51 319, 74 160, 77 266 in «Colour Index», Vol. IV, 3rd edition, 1971, published by «The Society of Dyers and Colourists», Great Britain, insbesondere organische chemische Verbindungen entsprechend den Colour Index-Nummern 21110 sowie 71100.

Es ist auch möglich, Mischungen chemisch unterschiedlicher Verbindungen als Farbstoff oder Lichtschutzmittel, insbesondere Mischungen der entsprechend den genannten Colour Index-Nummern chemisch konstituierten Verbindungen zu verwenden, beispielsweise Mischungen chemischer Verbindungen auf anorganischer Basis oder Mischungen chemischer Verbindungen auf organischer Basis oder Mischungen chemischer Verbindungen auf anorganischer Basis sowie chemischer Verbindungen auf organischer Basis.

Das Auftragen der ein Gemenge aus chemischem Bindemittel in Gestalt synthetischer hydrophiler Harzvorkondensate und den Farbstoff oder das Lichtschutzmittel bildender chemischer Verbindungen enthaltenden Flüssigkeit auf wenigstens eine Faserbahnoberfläche kann in an sich bekannter Weise mit bekannten Mitteln, beispielsweise durch Rakeln, erfolgen. Die Auftragtechnik ist nicht Gegenstand vorliegender Erfindung.

Die Flüssigkeit hat vorteilhaft bei Raumtemperatur eine Viskosität im Bereich von 4 bis 200 cp.

Die Flüssigkeit besteht zu 60 bis 90 Gew.-% aus flüssigem chemischem Mittel, bevorzugt Wasser, aliphatischem Alkohol, insbesondere Äthanol oder Isopropanol oder wässrigen Lösungen der genannten Alkohole, und zu insgesamt 40 bis 10 Gew.-% aus einem Gemenge chemischer Stoffe, dessen einer Teil aus chemischem Bindemittel in Gestalt synthetischer hydrophiler Harzvorkondensate und dessen anderer Teil aus optisch wirksamer chemischer Verbindung besteht, wobei sich die gewichtsprozentualen Angaben jeweils auf das Gesamtgewicht der Flüssigkeit beziehen, und der Feststoffanteil der Flüssigkeit zu 70 bis 90 Gew.-% aus synthetischem hydrophilem Harzvorkondensat und zu 30 bis 10 Gew.-% aus optisch wirksamer chemischer Verbindung, jeweils bezogen auf das Gesamtgewicht des Feststoffanteils der Flüssigkeit.

Die Flüssigkeit wird in einer solchen Menge auf wenigstens eine Oberfläche der Faserbahn aufgetragen, dass sich nach Vertreiben des flüchtigen Mittels der Flüssigkeit im Bereich von 1 bis 8 g des Feststoffanteils der Flüssigkeit pro $m^2$ Trägeroberfläche befindet.

Die Faserbahn besteht vorteilhaft aus langfaserigem Papier, insbesondere bevorzugt aus Hanffasern in Wirrlageanordnung.

Insbesondere bevorzugt ist eine Flüssigkeit, die 75 Gew.-% Wasser als flüssiges flüchtiges Mittel enthält, wobei die gewichtsprozentuale Angabe sich auf das Gesamtgewicht der Flüssigkeit bezieht, und insgesamt 25 Gew.-%, bezogen auf ihr Gesamtgewicht, Feststoffanteil aufweist, der zu 70 Gew.-% aus synthetischem Harzvorkondensat, beispielsweise Melaminformaldehydvorkondensat, und zu 30 Gew.-% aus der den Farbstoff oder das Lichtschutzmittel bildenden chemischen Verbindung, beispielsweise einer solchen entsprechend der chemischen Konstitution gemäss Colour Index-Nummer 21 110, besteht, wobei die gewichtsprozentualen Angaben sich jeweils auf das Gesamtgewicht des Feststoffanteils der Flüssigkeit beziehen.

Die Flüssigkeit wird vorteilhaft in einer solchen Menge auf die Oberfläche der Faserbahn, beispielsweise einer solchen aus Papier, aufgetragen, dass nach Vertreibung des flüchtigen Mittels der Flüssigkeit, beispielsweise durch Einwirkung hinreichender Wärme in einem entsprechend beheizten Trockentunnel, der auf der Faserbahnoberfläche abgelagerte Anteil des Feststoffgemenges der Flüssigkeit 5 g pro m² Unterlage beträgt. Die Papierfaserbahn hat beispielsweise ein Flächengewicht von 21 g/m².

Das Auftragen der Flüssigkeit auf die Faserbahnoberfläche erfolgt beispielsweise durch Aufrakeln mit Hilfe einer Wasser- oder Luftrakel in bekannter Weise.

Die auf ihrer Oberfläche mit dem Stoffgemenge vorpräparierte Faserbahn wird dann längsaxial mit Hilfe einer bekannten Faltschulter zu einem Schlauch geformt, die überlappenden Bahnseitenkanten werden verklebt. Die Faltung der Faserbahn zum Schlauch erfolgt in der Weise, dass wenigstens die Aussenseite des Faserschlauchs mit dem genannten Stoffgemenge wenigstens teilweise überzogene Fasern aufweist.

Anschliessend wird der vorpräparierte Faserschlauch in an sich bekannter Weise mit Viskoselösung imprägniert und beschichtet. Der mit Viskoselösung imprägnierte und beschichtete Schlauch wird dann der Einwirkung von Fällflüssigkeit unterworfen, der sich im Gelzustand befindliche Cellulosehydratschlauch wird dann gewaschen, beispielsweise mit Wasser, man lässt dann auf ihn wässrige, chemisches Weichmachungsmittel, beispielsweise Glycerin oder Glykol, enthaltende Flüssigkeit einwirken, trocknet den Schlauch dann beispielsweise bei 60 bis 120°C und befeuchtet ihn gegebenenfalls mit Wasser.

Die Imprägnierung und Beschichtung des vorpräparierten Faserschlauchs mit Viskose erfolgt in an sich bekannter Weise mit Hilfe bekannter Vorrichtungen (Beschichtungsdüsen) beispielsweise in der im britischen Patent 1 330 698 beschriebenen Weise.

Beispiel 1

Die Oberfläche einer Papierfaserbahn mit einem Flächengewicht von 21 g/m² wird mit Hilfe einer Rakelvorrichtung mit einer Flüssigkeit folgender Zusammensetzung beaufschlagt: 75 Gew.-% Wasser und 25 Gew.-% Feststoffanteil, jeweils bezogen auf das Gesamtgewicht der Flüssigkeit, wobei der Feststoffanteil zu 70 Gew.-% aus wasserlöslichem Melaminformaldehydvorkondensat und zu 30 Gew.-% aus organisch-chemischer Verbindung gemäss Colour Index-Nummer 21 110 besteht. Die Flüssigkeit wird in einer solchen Menge auf die Oberfläche der Faserbahn aufgetragen, dass pro m² Faserbahnoberfläche 4 g Feststoffanteil der Flüssigkeit entfällt. Die Faserbahn wird dann durch einen auf 110°C beheizten Trockenkanal hindurchgeführt, wobei das flüssige flüchtige Mittel der Flüssigkeit vertrieben wird, und danach längsaxial zu einem Schlauch derart geformt, dass die flüssigkeitsbeaufschlagte Seite der Faserbahn die Aussenseite des Faserschlauchs bildet. Anschliessend wird der Faserschlauch in an sich bekannter Weise mit Viskoselösung imprägniert und beschichtet, mit Fällflüssigkeit und nachfolgend mit chemisches Weichmachungsmittel enthaltender Flüssigkeit behandelt, durch Wärmeeinwirkung getrocknet und gegebenenfalls mit Wasser befeuchtet.

Beispiel 2

Wie Beispiel 1, jedoch mit der Abwandlung, dass das Harzvorkondensat aus Epichlorhydrin-Polyamin-Polyamid-Harz besteht und die den Farbstoff oder das Lichtschutzmittel bildende chemische organische Verbindung einer chemischen Konstitution gemäss Colour Index-Nummer 71 100 entspricht.

## Patentansprüche

1. Schlauchförmige Verpackungshülle, insbesondere künstliche Wursthülle, aus gegebenenfalls chemisch weichgemachtem Cellulosehydrat, deren Wandung eine faserige Einlage sowie einen Zusatz in Form eines Farbstoffes oder Lichtschutzmittels enthält, dadurch gekennzeichnet, dass wenigstens ein Teil der die Einlage bildenden Fasern selbst wenigstens teilweise einen Überzug aus einem Gemenge chemischer Stoffe trägt, das zum mengenmässig überwiegenden Anteil aus chemischem Bindemittel auf Basis von synthetischem hydrophilem wärmegehärtetem Harzvorkondensat und zum mengenmässig geringeren Anteil aus dem Farbstoff oder Lichtschutzmittel besteht, wobei die mengenmässige Angabe sich jeweils auf das Gesamtgewicht des Stoffgemenges bezieht, und dass auf diesen Überzug eine Cellulosehydratschicht, hergestellt aus Viskose, aufgeschichtet ist.

2. Schlauchförmige Verpackungshülle nach Anspruch 1, dadurch gekennzeichnet, dass das Gemenge im Bereich von 70 bis 90 Gew.-% aus wärmegehärtetem synthetischem hydrophilem Harzvorkondensat und zu 30 bis 10 Gew.-% aus einer chemischen Verbindung des Farbstoffes oder Lichtschutzmittels, jeweils bezogen auf das Gesamtgewicht des Gemenges, besteht.

3. Schlauchförmige Verpackungshülle nach Anspruch 1 oder 2, dadurch gekennzeichnet, dass das Stoffgemenge jeweils aus wärmegehärtetem Melaminformaldehydvorkondensat, Harnstoffformaldehydvorkondensat oder Epichlorhydrin-Polyamid-Polyamin-Harz besteht, und der Farbstoff oder das Lichtschutzmittel eine chemische Konstitution entsprechend einer der Colour Index-Nummern 11 765, 21 100, 21 108, 12 370, 12 420, 71 100, 12 517, 51 319, 74 160, 77 266, 21 110 aufweist.

4. Verfahren zur Herstellung schlauchförmiger, einen Farbstoff oder ein Lichtschutzmittel enthaltender Verpackungshüllen nach einem der Ansprüche 1 bis 3, wobei man aus einer Faserbahn einen Schlauch bildet, diesen mit Viskoselösung imprägniert und beschichtet, Fällflüssigkeit auf ihn wirken lässt, ihn wäscht, gegebenenfalls wässrige, chemisches Weichmachungsmittel enthaltende Flüssigkeit auf ihn zur Einwirkung bringt, den Schlauch dann durch Wärmeeinwirkung trocknet und ihn gegebenenfalls mit Wasser befeuchtet, dadurch gekennzeichnet, das man vor dem Bilden des Schlauches auf wenigstens eine Oberfläche der Faserbahn eine Flüssigkeit aufträgt, die als Feststoffanteil ein Gemenge enthält, das zum mengenmässig überwiegenden Anteil aus synthetischem, hydrophilem wärmehärtbarem Harzvorkondensat und zum mengenmässig geringeren Anteil aus dem Farbstoff oder Lichtschutzmittel besteht, wobei die Mengenangaben sich jeweils auf das Gesamtgewicht des Feststoffanteils der Flüssigkeit beziehen und der Feststoffanteil den mengenmässig geringeren und der flüssige flüchtige Anteil den mengenmässig grösseren der Flüssigkeit, jeweils bezogen auf ihr Gesamtgewicht, bilden, und dass man dann den flüssigen flüchtigen Anteil der Flüssigkeit vertreibt, bevor man aus der so behandelten Faserbahn den Schlauch bildet und die Imprägnierung und Beschichtung mit Viskoselösung durchführt.

## Claims

1. Tubular packaging sheath, in particular an artificial sausage casing, comprising an optionally chemically plasticized cellulose hydrate and having in its wall a fibrous insert and an addition in the form of a dyestuff or light-absorbing substance, wherein at least part of the fibers forming the insert carry at least partially a coating of a mixture of chemical substances which comprise a quantitatively predominant proportion of a chemical binder based on a synthetic, hydrophilic heat-cured resin precondensate and a quantitatively minor proportion of the dyestuff or light-absorbing substance, the quantitative proportions being, in each case, relative to the total weight of the mixture of substances; and wherein a cellulose hydrate layer, prepared from viscose, is applied to this coating.

2. A tubular packaging sheath as claimed in claim 1, wherein the mixture comprises from about 70 to 90 percent by weight of heat-cured, synthetic hydrophilic resin precondensate and from about 30 to 10 percent by weight of a chemical compound of the dyestuff or light-absorbing substance, in each case relative to the total weight of the mixture.

3. A tubular packaging sheath as claimed in claim 1 or claim 2, wherein the mixture of substances comprises, in each case, a heat-cured melamine-formaldehyde precondensate, a urea-formaldehyde precondensate or an epichlorohydrin-polyamido-polyamine resin and the dyestuff or light-absorbing substance has a chemical structure corresponding to one of the Colour Index numbers 11 765; 21 100; 21 108; 12 370; 12 420; 71 100; 12 517; 51 319; 74 160; 77 266 or 21 110.

4. A process for the manufacture of tubular packaging sheaths comprising a dyestuff or light-absorbing substance, as claimed in any of claims 1 to 3, by forming a tube from a fiber web, impregnating and coating the tube with viscose solution, allowing a precipitating liquid to act on the tube, washing the tube, treating it with an optionally aqueous liquid containing a chemical plasticizer, then drying the tube by the action of heat and optionally moistening it with water, wherein, prior to forming the tube, a liquid is applied to at least one surface of the fiber web, which liquid comprises as solids constituent a mixture of a quantitatively predominant proportion of a synthetic, hydrophilic heat-curable resin precondensate and of a quantitatively minor proportion of the dystuff or light-absorbing substance, the quantitative proportions being in each case relative to the total weight of the solids constituent of the liquid and the solids constituent forming the quantitatively minor proportion and the fluid volatile constituent forming the quantitatively major proportion of the liquid, in each case relative to its total weight; and wherein the fluid volatile constituent of the liquid is expelled before the tube is formed of the fiber web treated in this way and before the tube is impregnated and coated with viscose solution.

## Revendications

1. Enveloppe tubulaire pour emballages, en particulier boyau artificiel pour saucisses, formé d'hydrate de cellulose éventuellement plastifié chimiquement, ayant incorporés dans la paroi un produit fibreux ainsi qu'un additif sous la forme d'un colorant ou d'un photostabilisant, caractérisée en ce qu'au moins une partie des fibres incorporées portent elle-mêmes au moins partiellement un revêtement d'un mélange de composés chimiques comprenant en proportion majoritaire un liant chimique à base de produit de précondensation résineux synthétique thermodurci hydrophile et en proportion minoritaire un colorant ou un photostabilisant, l'indication quantitative se référant chaque fois au poids total du mélange de composés, et en ce que par dessus ce revêtement est appliquée une couche d'hydrate de cellulose préparée à partir de viscose.

2. Enveloppe tubulaire pour emballages selon la revendication 1, caractérisée en ce que le mélange comprend une proportion comprise entre 70 et 90% en poids de produit de précondensation résineux synthétique thermodurci hydrophile et une proportion comprise entre 30 et 10% en poids d'un composé chimique du colorant ou du photostabilisant, chaque fois relativement au poids total du mélange.

3. Enveloppe tubulaire pour emballages selon la revendication 1 ou 2, caractérisée en ce que le mélange de composés est formé dans chaque cas d'un produit de précondensation mélamine/formaldéhyde, d'un produit de précondensation urée/formaldéhyde ou de résine épichlorhydrine/polyamide/polyamine, à l'état thermodurci, et en ce que le colorant ou le photostabilisant présente une constitution chimique correspondant aux numéros Colour Index 11 765, 21 100, 21 108, 12 370, 12 420, 71 100, 12 517, 51 319, 74 160, 77 266, 21 110.

4. Procédé de fabrication d'enveloppes tubulaires pour emballages contenant un colorant ou un photostabilisant, selon l'une des revendications 1 à 3, dans lequel on forme un tube à partir d'une bande de fibres, on l'imprègne et on le revêt de solution de viscose, on fait agir sur le tube un précipitant, on le lave, éventuellement on fait agir sur le tube un liquide aqueux contenant un plastifiant chimique, on le sèche par l'action de la chaleur et on l'humidifie éventuellement avec de l'eau, caractérisé en ce qu'avant la formation du tube, on applique sur au moins une surface de la bande de fibres un liquide qui contient comme matière solide un mélange se composant en proportion majoritaire d'un produit de précondensation résineux synthétique thermodurcissable hydrophile et en proportion minoritaire, d'un colorant ou d'un photostabilisant; les indications quantitatives se référant chaque fois au poids total des matières solides du liquide, des matières solides formant une proportion minoritaire et le composant volatil liquide une proportion majoritaire du liquide, chaque fois relativement à son poids total, et en ce qu'ensuite on élimine le composant volatil du liquide, avant de former le tube à partir de la bande de fibres ainsi traitée et d'effectuer l'imprégnation et le revêtement au moyen d'une solution de viscose.